# EUROPEAN PATENT SPECIFICATION

(11) **EP 1 790 136 B1**
(45) Date of publication and mention of the grant of the patent: **08.04.2009**
(21) Application number: 05801039.8
(22) Date of filing: 09.09.2005
(51) Int. Cl.: H04L 12/56

(54) **WIRELESS USB NETWORK ADAPTER WITH SMART CARD**
DRAHTLOSER USB-NETZWERKADAPTER MIT CHIPKARTE
ADAPTATEUR DE RÉSEAU SANS FILS USB AVEC CARTE À PUCE

(30) Priority: 15.09.2004 EP 04292215
(43) Date of publication of application: 30.05.2007
(73) Proprietor: Gemalto SA, 92190 Meudon (FR)
(72) Inventor: DANRE, Nicolas, F-92130 Issy les Moulineaux (FR)
(74) Representative: Fragnaud, Aude
(86) International application number: PCT/IB2005/002677
(87) International publication number: WO 2006/030275

(56) References cited:
- WO-A-03/019396
- DE-A1- 10 224 502
- US-A1- 2002 011 516
- US-A1- 2003 087 601
- US-A1- 2004 068 653

## Description

### BACKGROUND OF THE INVENTION

### Field of the Invention

The present invention generally relates to security aspects in wireless networking (also called "Wi-Fi" - wireless fidelity), and more specifically to a wireless USB network adapter which is capable of providing high-level security functionality in a user-friendly way.

Wireless computer networks are in widespread use today. They are particularly useful for network access of mobile computers, or laptops, which can be temporarily connected to the network without the need of plugging a cable between a network hub and the computer.

A wireless network consists of an access point and client computers which can hook into the network with the help of client hardware, the so-called "network adapter", which establishes a radio connection to the access point. Such network adapters can be built into a computer in the form of network cards, or they can be external devices, which are connected to the computer, for example via the USB interface (wireless USB network adapter).

USB (universal serial bus) is a standardised interface included in practically all personal computers built since 1997. A USB device is plugged into a USB port on a computer via a simple connector. Many USB devices, including wireless USB network adapters, come in the form of a "token", which is a portable device so small (about 5-10 cm length and 1-2 cm width) that it can easily by attached to a key ring. This is ideal for travellers using a laptop.

### Background art

See US 2004/0 068 653 (Fascenda) which discloses a shared network access using different access keys.

Since wireless networks can be accessed by anyone located within the radio range of the access point, these networks are highly exposed to security attacks. The attacks can range from simply using the network for free, e.g. to get Internet access, to spying out, modifying, or deleting data stored on the computers connected to the network.

High-level security can be achieved with the help of authentication credentials associated with and held by each user. For example, in a public key infrastructure (PKI), users hold a secret private key with which they can be authenticated and in GSM phone architecture users are authenticated by a unique identifier validated by a secret key. Before allowing access to the wireless network, a challenge/response process can be executed between the device requesting the access and the wireless network. During this challenge/response, security is ensured thanks to algorithms that uses authentication credentials and elements randomly generated for each process.

Storing authentication credentials on hard disks of a computer is inefficient and risky. Hard disks can and do crash, and credentials can be stolen (copied) without the user even knowing that the credentials have been compromised. For this reason, it is safer to embed the credentials into a piece of hardware with cryptographic capabilities, which is able of providing strong protection of the credentials.

One possibility for providing high-level security for access to wireless networks would be to embed user credentials into the wireless network adapter used by the user. Unfortunately, although such hardware pieces might allow on-board key generation, they cannot be personalised en masse, implying that end-users must put on credentials by hand one at a time. Moreover, for custom security features, to adapt to one or more architecture or to use custom algorithms, specific network adapters had to be designed.

In contrast to that, smart cards are proving to be ideal for storing high value credentials. They are an extremely tamperproof medium, they can process secure algorithms and can furthermore be cheaply personalised en masse. A smart card can be connected to the computer via a smart card reader, the smart card reader itself being connected to the computer e.g. via the USB interface. Since recently, smart cards are being marketed under the product name "e-gate" by the applicant where the USB protocol is implemented even on the smart card itself, so the smart card can plug directly into the USB port on a computer via a simple connector. This connector does not carry any electronics, unlike a reader for a traditional smart card, which supports only the ISO (International Standardization Organization) standard communication protocols.

However, despite all these advantages of using a smart card for storing authentication credentials and other security-related data, the use of a smart card for the security management in addition to the use of wireless network adapter for facilitating network access has the disadvantage that the deployment of all the hardware and software needed for secure network access is divided into two completely separate tasks: (1) installation of the wireless network adapter; and (2) installation of the security-related devices, e.g. a smart card which stores authentication credentials. This two-step installation process is not very user-friendly, and especially if the two devices are delivered by different manufacturers, problems of interoperability of the two devices may occur. In the conventional art, no solution exists to combine the two installation steps into one single step.

### SUMMARY OF THE INVENTION

It is therefore an object of the invention to provide a device to solve the problems outlined above. This object is achieved by the devices as defined in independent claims 1 and 6. Further preferred embodiments are defined in the dependent claims.

According to a preferred embodiment of the invention, the object is achieved by a device capable of communicating with a computer via a USB interface, the device comprising a USB hub and a wireless USB network adapter which is connected to the USB hub, and being adapted such that a smart card capable of communication using the USB protocol can be connected to the USB hub.

Equipping a network adapter with a smart card, combining both in one device, has the advantage that no two separate devices have to be installed for facilitating secure access to wireless networks. Also, for the two functionalities, only one USB port is required at the computer. Furthermore, personalization en masse of the combined device is facilitated. Since the smart card according to the invention is capable of communication using the USB protocol, a simple USB hub can be used for connecting both the network adapter and the smart card to the computer.

According to a further preferred embodiment of the invention, the device is a portable USB token.

USB tokens are small, handy and easy to support and therefore are very popular among users.

According to a further preferred embodiment of the invention, the smart card to be connected to the USB hub can be inserted into the device.

The device therefore offers one casing for both the network adapter and the smart card. No connection via an external cable or the like is necessary.

According to a further preferred embodiment of the invention, the device comprises furthermore the smart card, which is connected to the USB hub.

In this embodiment of the invention, the device is delivered with the smart card already inserted into it, so that the user does not have to insert the smart card.

According to a further preferred embodiment of the invention, all operations dealing with the management of security of network access are delegated to the smart card, which is connected to the USB hub.

Since a smart card is highly tamperproof, it qualifies as the best place to store secret authentication credentials and manage other security issues of network access.

Another preferred embodiment of the invention is a smart card capable of communication using the USB protocol, the smart card being adapted for usage in combination with a device outlined above.

According to a further preferred embodiment of the invention, the smart card securely stores authentication credentials. As outlined above, the smart card is the ideal place to store critical information like authentication credentials.

The smart card can also be customized with specific algorithms and can be in charge of all or part of the challenge/response process for authentication.

The smart card can also store multiple authentication credentials to allow authentication on two ore more wireless networks using different security architecture.

### BRIEF DESCRIPTION OF THE DRAWINGS

The foregoing and other objects, aspects and advantages of the invention will be better understood from the following detailed description of the preferred embodiments of the invention made with reference to the drawing, where:

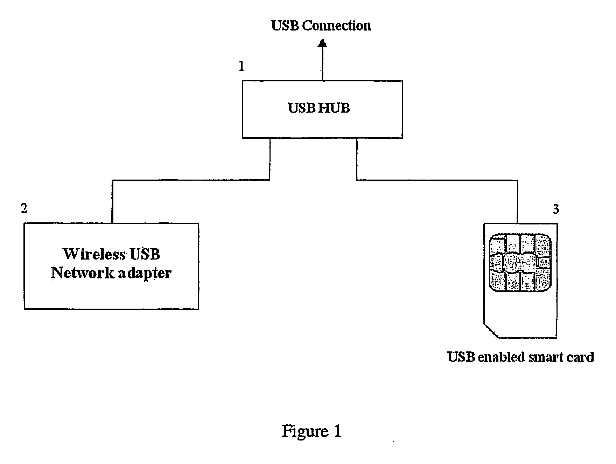

- Fig. 1: is a schematic diagram showing the architecture of a preferred embodiment of the invention.

### DETAILED DESCRIPTION OF A PREFERRED EMBODIMENT OF THE INVENTION

Referring now to the drawings, Figure 1 shows the architecture of a preferred embodiment of the invention, which consists of a device comprising a wireless USB network adapter 2 and a smart card 3 capable of communication using the USB protocol. Since both the adapter 2 and the smart card 3 are USB-enabled, they can connect to a USB hub 1. The USB hub 1 can be connected to a computer via a USB connection, i.e. the device can be plugged into a USB port of the computer. Through the hub, both the network adapter 2 and the card 3 are connected to the computer. Note that the device according to the invention does not necessarily have to comprise the smart card 3 itself, but it has to provide the means for connecting a USB-enabled smart card to its USB hub 1.

Since the physical dimensions and the placement of the chip connectors on the card are specified by ISO standards, the hardware which forms the physical interface to the smart card has to adhere to these standards. For example, in an embodiment of the invention where the smart card 3 can be inserted into the device, i.e. it can be placed within the casing of the device, the device comprises the means for holding the card 3 and the physical interface (e.g. the electronic contacts) to access the smart card, the physical interface adhering to ISO standards.

However, since the USB protocol is implemented on the smart card 3, the ISO standards for the communication protocol between the card and the card reader do not have to be implemented on the device, nor has the device to provide means for translating the ISO communication protocols to the USB protocol.

The device according to the invention will in general be designed such that the smart card 3 can be inserted into and removed from the device, as it is the case in the token form factor of the "e-gate" product of the applicant mentioned above. In this case, manufacturers can chose to ship the device with or without smart card. However, the smart card 3 might also be fixedly integrated into the device.

In general, the device will be a USB token, of the size of conventional wireless USB network adapters in token form factor.

Now, all operations dealing with the management of security, in particular relating to security issues of the access to the wireless network, can advantageously be delegated to the smart card 3. For example, authorisation credentials like private keys or certificates can be stored on the smart card and the smart card deal with the entire authentication process when the computer wants to connect to the wireless network.

In the following, three use cases of the present invention will be given as an example.

### (1) Corporate wireless network:

Thanks to the invention, a company will be able to give tokens to its employees and deploy cards personalised with its internal card management system.

Despite the fact that more and more personal computers today have embedded wireless network adapters, deployment of tokens can be very interesting for companies because it reduces support to only one type of device.

### (2) Mass market offer:

Thanks to the invention, a Wi-Fi Internet Service Providers (hot spot) can hand out tokens to its customers, together with smart cards which have been personalised by a personalisation centre. The personalization centre will manage the authentication credentials and store them on the cards using the customer info provided by the Internet Service Provider. The customer can then authenticate himself with the token on any PC on any access point deployed by the Wi-Fi Internet Service Provider.

### (3) ADSL Internet Service Provider provides secure wireless ADSL routers

Thanks to the invention, an ADSL Internet Service Providers can provide an ADSL router together with tokens to its customers, and smart cards specifically personalised to connect only to this specific router or to routers issued by the Service Provider.

## Claims

1. A device capable of communicating with a computer via a USB interface, the device comprising a USB hub (1) and being adapted such that a smart card (3) capable of communication using the USB protocol can be connected to the USB hub (1), wherein the device comprises a wireless USB network adapter (2) which is connected to the USB hub (1).

2. Device according to claim 1, wherein said device is a portable USB token.

3. Device according to claim 1 or 2, wherein the smart card to be connected to the USB hub (1) can be inserted into the device.

4. Device according to one of the previous claims, wherein said device comprises furthermore the smart card (3) which is connected to the USB hub (1).

5. Device according to one of the previous claims, wherein all operations dealing with the management of security of network access are delegated to the smart card (3) which is connected to the USB hub (1).

6. Smart card (3) capable of communication using the USB protocol, the smart card (3) being adapted for usage in combination with a device according to claims 1 to 5.

7. Smart card (3) according to claim 6, wherein said smart card securely stores authentication credentials.

## Patentansprüche

1. Ein Gerät, das über eine USB-Schnittstelle mit einem Computer kommunizieren kann, wobei das Gerät einen USB-Hub (1) enthält und so angepasst wird, dass eine Chipkarte (3), die zur Kommunikation unter Verwendung des USB-Protokolls in der Lage ist, an den USB-Hub (1) angeschlossen werden kann, wobei das Gerät einen drahtlosen USB-Netzwerkadapter (2) enthält, der an den USB-Hub (1) angeschlossen ist.

2. Gerät gemäß Anspruch 1, wobei das besagte Gerät ein tragbares USB-Token ist.

3. Gerät gemäß Anspruch 1 oder 2, wobei die an den USB-Hub (1) anzuschließende Chipkarte in das Gerät eingeführt werden kann.

4. Gerät gemäß einem der vorherigen Ansprüche, wobei das besagte Gerät zudem die Chipkarte umfasst, die an den USB-Hub angeschlossen ist (1).

5. Gerät gemäß einem der vorherigen Ansprüche, wobei alle Abläufe, die sich mit dem Sicherheitsmanagement des Netzwerkzugangs befassen, an die Chipkarte (3) delegiert werden, die an den USB-Hub (1) angeschlossen ist.

6. Chipkarte (3), die in der Lage ist, unter Verwendung des USB-Protokolls zu kommunizieren, wobei die Chipkarte (3) zur Nutzung in Verbindung mit einem Gerät gemäß den Ansprüchen 1 bis 5 angepasst wird.

7. Chipkarte (3) gemäß Anspruch 6, wobei die besagte Chipkarte sicher Authentifizierungsberechtigungsnachweise speichert.

## Revendications

1. Un appareil capable de communiquer avec un ordinateur via une interface USB, sachant que l'appareil inclut un hub USB (1) et est ajusté de telle manière qu'une carte à puce (3) adaptée à la communication et utilisant le protocole USB peut être connectée au hub USB (1), sachant que l'appareil comprend un adaptateur réseau USB sans fil (2) connecté au hub USB (1).

2. Un appareil conformément à la revendication 1, sachant que ledit appareil est un token USB portable.

3. Un appareil conformément à l'une des revendications 1 ou 2, sachant que la carte à puce à connecter au hub USB (1) peut être insérée dans l'appareil.

4. Un appareil conformément à l'une des revendications précédentes, sachant que ledit appareil comprend également la carte à puce (3) connectée au hub USB (1).

5. Un appareil conformément à l'une des revendications précédentes, sachant que toutes les opérations concernant la gestion de la sécurité de l'accès au réseau sont déléguées à la carte à puce (3) connectée au hub USB (1).

6. Une carte à puce (3) adaptée à la communication et utilisant le protocole USB, sachant que la carte à puce (3) peut être utilisée en association avec un appareil conforme aux revendications 1 à 5.

7. Une carte à puce (3) conformément à la revendication 6, sachant que ladite carte à puce enregistre de manière sûre les informations d'identification.
